# EUROPEAN PATENT APPLICATION

(11) **EP 1 566 948 A1**
(43) Date of publication of application: **24.08.2005**
(21) Application number: 05003523.7
(22) Date of filing: 18.02.2005
(51) Int. Cl.: H04L 29/08, H04L 12/28

(54) **System and method for device discovery**

(30) Priority: 20.02.2004 US 783798
(71) Applicant: Nokia Corporation, 02150 Espoo (FI)
(72) Inventor: Grundström, Mika, 33100 Tampere (FI); Belimpasakis, Petros, 33720 Tampere (FI)
(74) Representative: Becker Kurig Straus

(57) **Abstract**

Systems and methods applicable, for instance, in device discovery operations. Various of the systems and methods provide, for example, for power savings at nodes. Moreover, various of the systems and methods provide, for example, for the exchange of information among nodes.

## Description

### Field of Invention

This invention relates to systems and methods for device discovery.

### Background Information

In recent years, there has been an increase in the employment of device discovery operations by devices. For example, devices increasingly include interfaces such as IEEE 802.11a, IEEE 802.11b, IEEE 802.11g, Bluetooth, IEEE 802.15a, IEEE 802.15.3, and/or the like, and various device discovery operations are performed in conjunction with one or more of those interfaces.

In view of at least the foregoing, there may be interest in technologies that, for example, facilitate the employment of device discovery operations.

### Summary of the Invention

According to various embodiments of the present invention, there are provided systems and methods applicable, for example, in device discovery operations.

Various embodiments provide, for example, for power savings at nodes. Moreover, various embodiments provide, for example, for the exchange of information among nodes.

### Brief Description of the Drawings

Fig. 1 is a diagram showing exemplary steps involved in device discovery operations according to embodiments of the present invention.
Fig. 2 is a diagram showing exemplary steps involved in list maintenance according to embodiments of the present invention.
Fig. 3 is a diagram showing exemplary steps involved in further device discovery operations according to embodiments of the present invention.
Fig. 4 is a diagram showing exemplary steps involved in device discovery operations including information exchange according to embodiments of the present invention.
Fig. 5 shows an exemplary general purpose computer employable in embodiments of the present invention.
Fig. 6 shows a functional block diagram of an exemplary device employable in embodiments of the present invention.

### Detailed Description of the Invention

### General Operation

According to various embodiments of the present invention, there are provided systems and methods applicable, for instance, in device discovery. Various embodiments provide for power savings at nodes. Such saving may be provided for, for instance, by reducing the extent to which devices communicate in device discovery operations.

Such embodiments might, for example, be employed by nodes using IEEE 802.11a, IEEE 802.11b, IEEE 802.11g, Bluetooth, Ultra Wide Band (UWB), and/or the like. Such UWB might, for instance, employ IEEE 802.15a, IEEE 802.15.3, and/or the like. It is noted that embodiments of the present invention may be implemented such that no changes are required at Open Systems Interconnect (OSI) Layer 1 (physical layer) or Layer 2 (data link layer).

It is noted that, in various embodiments, device discovery may, for example, be employable in home automation. For instance, in the case where a user arrives at home, a device situated in the user's home could discover a node carried by the user. Having discovered the node, the device situated in the user's home could act to have one or more actions performed such as, for instance, turning on lights, setting an audio system to play music (e.g., a favorite song of the user), setting the preferences profile of the node carried by the user to "home", and/or the like. Moreover, in various embodiments, one or more operations might alternately or additionally, be performed responsive to the user leaving her home. Operations to be performed upon the user leaving and/or entering her home could, for instance, be settable by the user, perhaps via a graphical user interface (GUI) and/or other interface provided, for example, by the device that she carried.

As is discussed in greater detail below, embodiments described herein allow for a device to determine that one or more other devices have entered its reception range. Moreover, embodiments described herein allow for a device to determine that one or more other devices have left its reception range. Such functionality might be employed, for instance, to allow device to determine that one or more other devices have entered or left a certain area.

### Device Discovery Operations

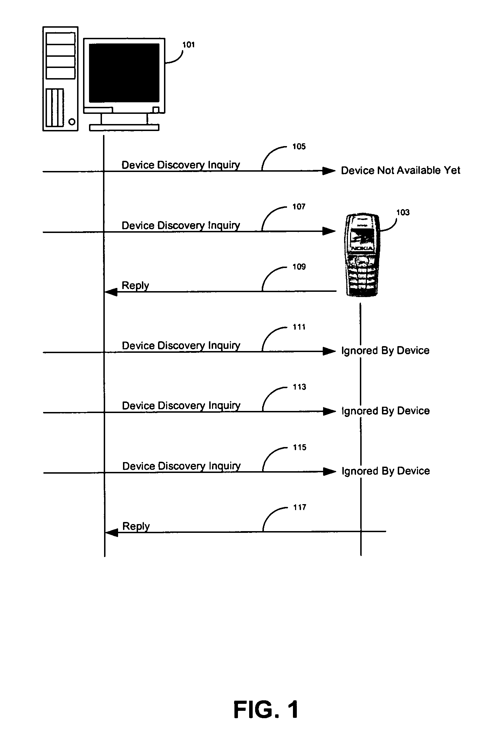

With respect to Fig. 1 it is noted that, according to various embodiments of the present invention, a device 101 may periodically send out device discovery inquiries (e.g., every 10 seconds). Such a device might, for instance, be a device not particularly subject to power constraints (e.g., a device running off of power provided by an electrical outlet).

As shown in step 105, there may, for instance, be no devices available for discovery at the time a particular device discovery inquiry is sent out by device 101.

As shown in step 107, a particular device discovery inquiry sent out by device 101 may be received by a device 103. Such a device might, for instance, be a device subject to power constraints (e.g., a device operating under battery power).

According to various embodiments, where device discovery inquiry 107 is a first device inquiry received by device 103 (e.g., within a certain period of time and/or the like), device 103 may act to reply to the inquiry (step 109).

Thereafter, device 103 may, in various embodiments, act to subsequently ignore one or more further device discovery inquiries (steps 111-115) before replying to one (step 117).

Device 103 might, for example, act to subsequently ignore every *y* received device discovery inquiries, and reply to every *(y+1)th* inquiry. For instance, device 103 might act to subsequently ignore every three device discovery inquiries and reply to every fourth device discovery inquiry.

As another example, device 103 may act to ignore received device discovery inquiries for one or more periods of time before replying to one.

For example, device 103 might act such that only every y seconds (e.g., every 60 seconds) would it act to reply to the next received device discovery inquiry.

According to various embodiments, the values or values to be employed by device 103 in ignoring received device discovery inquiries could be received and/or possessed in a number of ways. For example, device 103 might receive such values via a first device discovery inquiry 107 and/or one or more subsequently received device discovery inquires. As another example, such values could be received by device 103 from a server and/or the like, be placed on device 103 by a user, system administrator, device manufacturer, and/or the like. In various embodiments, such values might be standardized for all devices subscribing to a particular network, all devices of a particular type (e.g., battery operated device) subscribing to a particular network, and/or the like.

A number of considerations might, in various embodiments, be taken into account in choosing such values. For example, required responsiveness in discovery time, power consumption requirements, and/or the like might be taken into account.

Embodiments such as those described with respect to Fig. 1 might be useful, for example, in environments where device 101 was and/or was expected to be the only device in reception range of device 103, where there were and/or were expected to be few other devices than device 101 in reception range of device 103, and/or the like.

In various embodiments, device 101 could consider device 103 to no longer be in reception range in the case where it did not receive a reply from device 103 in greater than a particular period of time, where it did not receive a reply to its yth dispatched device discovery inquiry, and/or the like.

For instance, in the case where device 103 was to, every 60 seconds, reply to the next received device discovery inquiry, device 101 could, in various embodiments, consider device 103 to no longer be in reception range in the case where a reply was not received from device 103 after 60 seconds.

As alluded to above, device 101 could know of such a number of seconds, for example, by way of it dispatching the value to device 103, by device 101 knowing the value to have been assigned to 103, and/or the like.

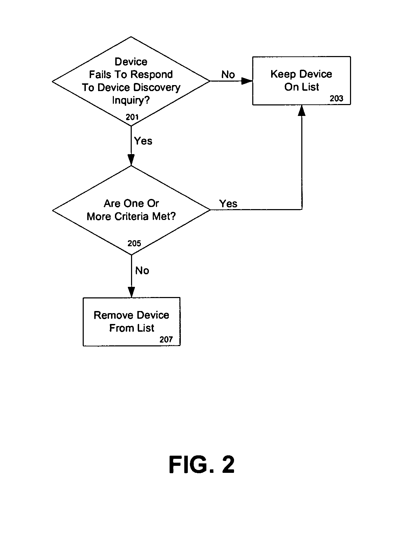

With respect to Fig. 2 it is noted that, in various embodiments, device 101 may act to maintain a list of discovered devices. Device 101 might, in various embodiments, act to remove a device from the list in the case where a reply to a device discovery inquiry was not, perhaps in accordance with that discussed above, received from the device (step 207). Alternately or additionally device 101 might, in various embodiments, keep a device on the list (e.g., as a detected and/or connected device), even though a reply to a device discovery inquiry was not received from the device, in the case where one or more criteria were met (steps 201, 205, and 203).

Such criteria might, for instance, be negotiated between device 101 and the device. Such negotiation might, for instance, take into account one or more of a wide variety of factors and/or allow for agreement upon one or more of a variety of criteria. For example, it might be agreed upon that a device would not be removed from the list until it had failed to respond to a defined number of device discovery inquiries. For instance, removal might require that two or more instances of no response. As another example, it might be agreed upon that a device that did not respond would be left on the list for an agreed upon amount of time.

It is noted that such a list might, perhaps in accordance with that discussed below, be employed by device 101 to let other devices know of devices that it had discovered.

### Further Device Discovery Operations

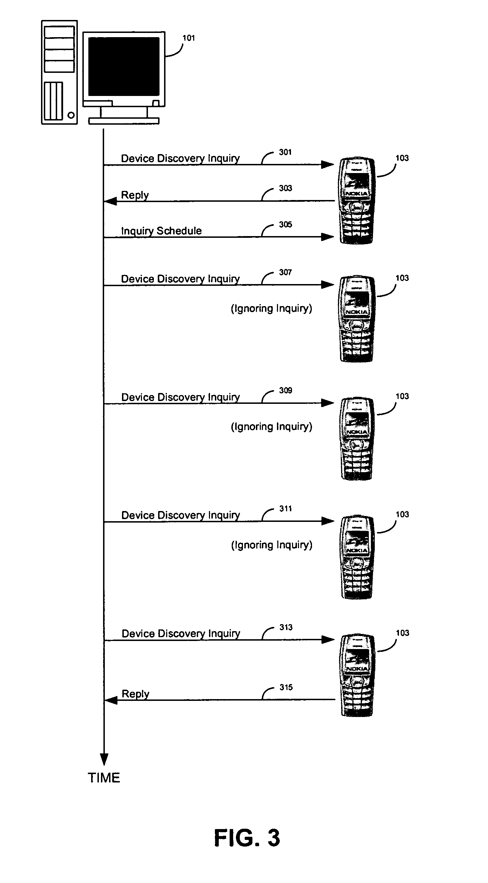

With respect to Fig. 3, it is noted that, according to various embodiments, device 101 may periodically send out device discovery inquiries, with device 101 letting device 103 know about the schedule according to which device discovery inquiries would be sent out. Device 101 could employ such a schedule, for instance, in order to identify particular received device discovery inquiries as being dispatched by device 101.

Accordingly, device 101 might, for instance, let device 103 know of the inquiry schedule (step 305) after device 103's reply (step 303) to a first received (e.g., within a certain period of time and/or the like) device discovery inquiry (step 301).

Such an embodiment might be useful, for instance, in a case where device discovery inquiries did not include indication of the device that dispatched them and/or where there were other devices in device 103's reception range other than device 101.

In such embodiments, device 103 could, for instance, act in a manner analogous to that described with respect to Fig. 1, but taking into account whether a received device discovery request was, according to the received schedule, dispatched by device 101 (steps 307-315).

Accordingly, device 103 might, for example, act to subsequently ignore every y received device discoveries that it, by way of the received schedule, understood to have been dispatched by device 101, and act to reply to every *(y+1)th* such inquiry.

As another example, device 103 might act to subsequently ignore, for one or more periods of time before replying to one, device discovery inquiries that it, by way of the received schedule, understood to have been dispatched by device 101.

It is noted that, in various embodiments, device 101 and device 103 might act to negotiate the schedule according to which device discovery inquiries are sent out by device 101. Such negotiation might, for instance, take into account one or more of a wide variety of factors and/or allow for agreement upon one or more of a variety of schedule aspects. Accordingly, for example, such negotiation might result in device 101 adopting a schedule for sending out device discovery inquiries that did not conflict with a further device's schedule for sending out device discovery inquiries such that, for instance, device 103 would be able to correctly determine if a particular received device discovery inquiry was dispatched by device 101 or the further device.

It is further noted that, in various embodiments, device 101 might, having received a subsequent reply from device 103 (step 315) act to dispatch to device 101 inquiry schedule information (e.g., updated inquiry schedule information).

Additionally, it is noted that, in various embodiments, perhaps in a manner analogous to that discussed with respect to Fig. 1, device 101 could consider device 103 to no longer be in reception range in the case where it did not receive a reply from device 103 in greater than a particular period of time, where it did not receive a reply to its yth dispatched device discovery inquiry, and/or the like.

Moreover, it is noted that, embodiments such as those described with respect to Fig. 1 might be useful, for example in environments where device 101 was not and/or was not expected to be the only device in reception range of device 103, where there were and/or were expected to be many other devices than device 101 in reception range of device 103, and/or the like.

### Device Discovery Operations Including Information Exchange

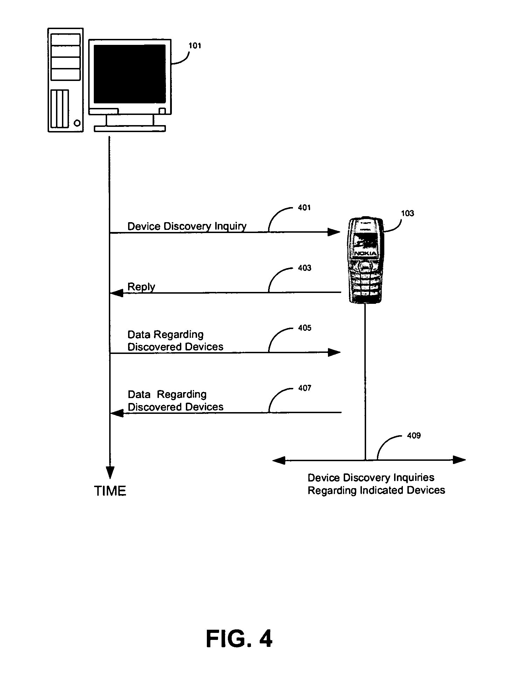

With respect to Fig. 4 it is noted that, according to various embodiments of the present invention, devices may exchange information about discovered devices.

For example, device 101, perhaps as a device not particularly subject to power constraints, continuously could act to discover devices by way of, for instance, dispatching device discover inquiries. Device 101 could, in various embodiments, maintain a store of information regarding discovered devices. Included among such information could, for instance, be information regarding discovery times, identifiers corresponding to discovered devices, network addresses and/or the like corresponding to discovered devices, and/or the like.

In various embodiments, after having a device (e.g., device 103) reply to a dispatched device discovery inquiry (steps 401, 403), device 101 could act to provide the device with some or all of its held information regarding discovered devices (step 405). Moreover, in various embodiments, the device contacted by device 101 could act to provide device 101 with some or all of held information regarding discovered devices (step 407).

In various embodiments, device 101 could act to update its held information regarding discovered devices in accordance with the information received from the contacted device. Alternately or additionally the device contacted by device 101 could, perhaps in a likewise manner, act to update held information regarding discovered devices in accordance with the information received from device 101.

Moreover, in various embodiments, the device contacted by device 101 could act to dispatch one or more device discovery inquiries in order to scan for devices indicated by device 101 to be reachable (step 409). Via such operations, the device contacted by device 101 might, in various embodiments, act to update held information regarding discovered devices. It is noted that, in various embodiments, in the case where device 101 did not report any devices believed to be reachable, the device contacted by device 101 might not act to dispatch device discovery queries. Alternately or additionally device 101 could, perhaps in a likewise manner, act to dispatch one or more device discovery inquiries in order to scan for devices indicated by the device contacted by device 101 to be reachable. Via such operations, device 101 might, in various embodiments, act to update held information regarding discovered devices.

It is noted that, in various embodiments, all, any, or none of the devices involved in operations of the sort discussed herein might be subject to power constraints.

Accordingly, for instance, it is noted with respect to Fig. 4 that two power-constrained devices (e.g., two mobile devices) might discover each other and exchange information regarding discovered devices. Included among the discovered devices might, for instance, be one or more power-constrained devices (e.g., mobile devices), and/or servers, access points, and/or non-power constrained devices.

### Hardware and Software

Various operations and/or the like described herein may be executed by and/or with the help of computers. Further, for example, devices described herein may be and/or may incorporate computers. The phrases "computer", "general purpose computer", and the like, as used herein, refer but are not limited to a processor card smart card, a media device, a personal computer, an engineering workstation, a PC, a Macintosh, a PDA, a computerized watch, a node, a wired or wireless terminal, a server, a network access point, a network multicast point, a set-top box, a personal video recorder (PVR, a game console, or the like, perhaps running an operating system such as OS X, Linux, Darwin, Windows CE, Windows XP, Windows Server 2003, Palm OS, Symbian OS, or the like, perhaps employing the Series 60 Platform and/or Series 90 Platform, and perhaps having support for Java and/or .Net.

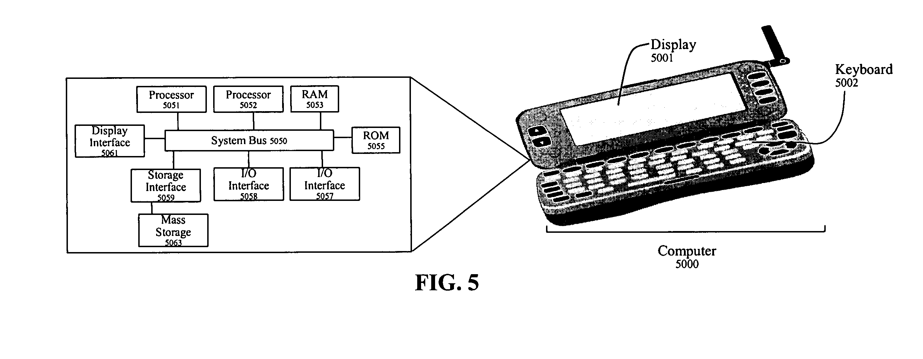

The phrases "general purpose computer", "computer", and the like also refer, but are not limited to, one or more processors operatively connected to one or more memory or storage units, wherein the memory or storage may contain data, algorithms, and/or program code, and the processor or processors may execute the program code and/or manipulate the program code, data, and/or algorithms. Accordingly, exemplary computer 5000 as shown in Fig. 5 includes system bus 5050 which operatively connects two processors 5051 and 5052, random access memory 5053, read-only memory 5055, input output (I/O) interfaces 5057 and 5058, storage interface 5059, and display interface 5061. Storage interface 5059 in turn connects to mass storage 5063. Each of I/O interfaces 5057 and 5058 may be an Ethernet, IEEE 1394, IEEE 1394b, IEEE 802.11a, IEEE 802.11b, IEEE 802.11g, IEEE 802.11i, IEEE 802.11e, IEEE 802.11n, IEEE 802.15a, IEEE 802.16a, IEEE 802.16d, IEEE 802.16e, IEEE 802.16x, IEEE 802.20, IEEE 802.15.3, ZigBee, Bluetooth, terrestrial digital video broadcast (DVB-T), satellite digital video broadcast (DVB-S), digital audio broadcast (DAB), general packet radio service (GPRS), Universal Mobile Telecommunications Service (UMTS), DVB-H, IrDA (Infrared Data Association), and/or other interface known in the art.

Mass storage 5063 may be a hard drive, optical drive, or the like. Processors 5051 and 5052 may each be a commonly known processor such as an IBM or Motorola PowerPC, an AMD Athlon, an AMD Opteron, an Intel ARM, an Intel XScale, a Transmeta Crusoe, a Transmeta Efficeon, an Intel Xenon, an Intel Itanium, or an Intel Pentium. Computer 5000 as shown in this example also includes a touch screen 5001 and a keyboard 5002. In various embodiments, a mouse, keypad, and/or interface might alternately or additionally be employed. Computer 5000 may additionally include or be attached to card readers, DVD drives, floppy disk drives, and/or the like whereby media containing program code (e.g., for performing various operations and/or the like described herein) may be inserted for the purpose of loading the code onto the computer.

In accordance with various embodiments of the present invention, a computer may run one or more software modules designed to perform one or more of the above-described operations. Such modules might, for example, be programmed using languages such as Java, Objective C, C, C#, C++, Perl, and/or Xen according to methods known in the art.
Corresponding program code might be placed on media such as, for example, DVD, CD-ROM, and/or floppy disk. It is noted that any described division of operations among particular software modules is for purposes of illustration, and that alternate divisions of operation may be employed. Accordingly, any operations discussed as being performed by one software module might instead be performed by a plurality of software modules. Similarly, any operations discussed as being performed by a plurality of modules might instead be performed by a single module. It is noted that operations disclosed as being performed by a particular computer might instead be performed by a plurality of computers. It is further noted that, in various embodiments, peer-to-peer and/or grid computing techniques may be employed.

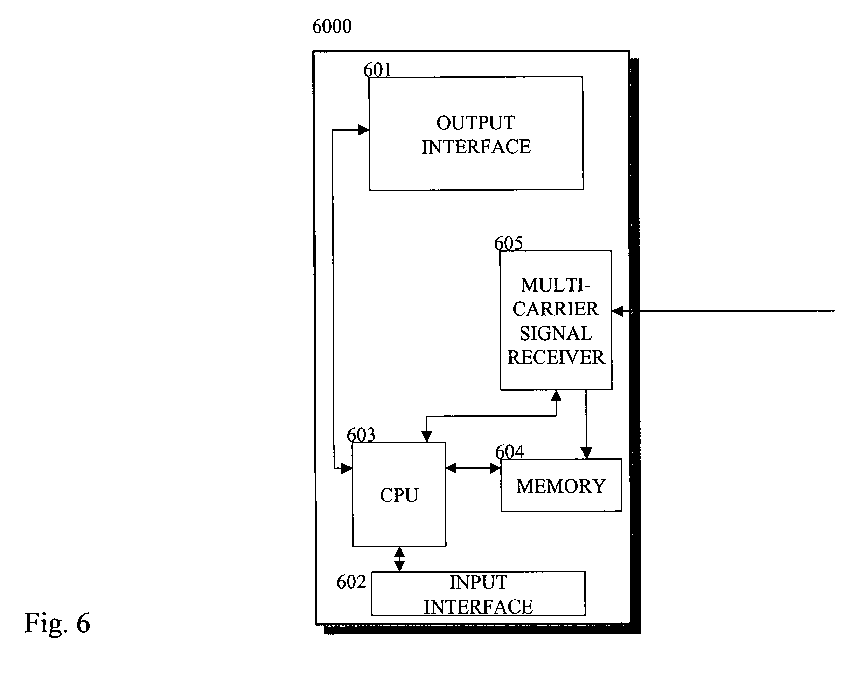

Shown in Fig. 6 is a block diagram of an exemplary terminal employable in various embodiments of the present invention. The terminal of Fig. 6 has been discussed in the foregoing. In the following, corresponding reference signs have been applied to corresponding parts. Terminal 6000 of Fig. 6 may be used in any/all of the embodiments described herein. The terminal 6000 comprises a processing unit CPU 603, a multi-carrier signal terminal part 605 and a user interface (601, 602). The multi-carrier signal terminal part 605 and the user interface (601, 602) are coupled with the processing unit CPU 603. One or more direct memory access (DMA) channels may exist between multi-carrier signal terminal part 605 and memory 604. The user interface (601, 602) comprises a display and a keyboard to enable a user to use the terminal 6000. In addition, the user interface (601, 602) comprises a microphone and a speaker for receiving and producing audio signals. The user interface (601, 602) may also comprise voice recognition (not shown).

The processing unit CPU 503 comprises a microprocessor (not shown), memory 604 and possibly software. The software can be stored in the memory 604. The microprocessor controls, on the basis of the software, the operation of the terminal 6000, such as the receiving of the data stream, the tolerance of the impulse burst noise in the data reception, displaying output in the user interface and the reading of inputs received from the user interface. The operations are described above. The hardware contains circuitry for detecting the signal, circuitry for demodulation, circuitry for detecting the impulse, circuitry for blanking those samples of the symbol where significant amount of impulse noise is present, circuitry for calculating estimates, and circuitry for performing the corrections of the corrupted data.

Still referring to Fig. 6, alternatively, middleware or software implementation can be applied. The terminal 6000 can be a hand-held device which the user can comfortably carry. Advantageously, the terminal 6000 can be a cellular mobile phone which comprises the multi-carrier signal terminal part 605 for receiving the multicast transmission stream. Therefore, the terminal 6000 may possibly interact with the service providers.

### Ramifications and Scope

Although the description above contains many specifics, these are merely provided to illustrate the invention and should not be construed as limitations of the invention's scope. Thus it will be apparent to those skilled in the art that various modifications and variations can be made in the system and processes of the present invention without departing from the spirit or scope of the invention.

## Claims

1. A method for device discovery, comprising:
responding to a first device discovery inquiry;
ignoring one or more further device discovery inquiries in accordance with one or more criteria; and
responding to a subsequent device discovery inquiry.

2. The method of claim 1, wherein one or more of the criteria specify a device discovery inquiry dispatch schedule.

3. The method of claim 2, wherein the device discovery inquiry dispatch schedule is negotiated with a device dispatching the first device discovery inquiry.

4. The method of claim 2, further comprising employing the schedule to determine an identity of a device dispatching a received device discovery inquiry.

5. The method of claim 1, wherein one or more of the criteria specify a time interval.

6. The method of claim 1, wherein one or more of the criteria specify a number of device discovery inquiries to ignore.

7. A computer program product comprising computer program code means adapted to perform the steps of the method of claim 1 when said program is run on a computer.

8. A method for device discovery, comprising:
receiving from a remote device a reply to a first device discovery inquiry;
determining no reply to have been received from the remote device to one or more further device discovery inquiries in accordance with one or more criteria; and
receiving a reply from the remote device to a subsequent device discovery inquiry.

9. The method of claim 8, wherein one or more of the criteria specify a device discovery inquiry dispatch schedule.

10. The method of claim 9, wherein the remote device employs the schedule to determine an identity of a device dispatching a received device discovery inquiry.

11. The method of claim 8, wherein one or more of the criteria specify a time interval.

12. The method of claim 8, wherein one or more of the criteria specify a number of device discovery inquiries to ignore.

13. The method of claim 8, further comprising maintaining a list of discovered devices.

14. The method of claim 13, wherein a device not replying to a device discovery inquiry is, where one or more criteria are met, kept on the list.

15. A computer program product comprising computer program code means adapted to perform the steps of the method of claim 8 when said program is run on a computer.

16. A system for device discovery, comprising:
a memory having program code stored therein; and
a processor disposed in communication with the memory for carrying out instructions in accordance with the stored program code;
wherein the program code, when executed by the processor, causes the processor to perform:
responding to a first device discovery inquiry;
ignoring one or more further device discovery inquiries in accordance with one or more criteria; and
responding to a subsequent device discovery inquiry.

17. The system of claim 16, wherein one or more of the criteria specify a device discovery inquiry dispatch schedule.

18. The system of claim 17, wherein the device discovery inquiry dispatch schedule is negotiated with a device dispatching the first device discovery inquiry.

19. The system of claim 17, wherein the processor further performs employing the schedule to determine an identity of a device dispatching a received device discovery inquiry.

20. The system of claim 16, wherein one or more of the criteria specify a time interval.

21. The system of claim 16, wherein one or more of the criteria specify a number of device discovery inquiries to ignore.

22. A system for device discovery, comprising:
a memory having program code stored therein; and
a processor disposed in communication with the memory for carrying out instructions in accordance with the stored program code;
wherein the program code, when executed by the processor, causes the processor to perform:
receiving from a remote device a reply to a first device discovery inquiry;
determining no reply to have been received from the remote device to one or more further device discovery inquiries in accordance with one or more criteria; and
receiving a reply from the remote device to a subsequent device discovery inquiry.

23. The system of claim 22, wherein one or more of the criteria specify a device discovery inquiry dispatch schedule.

24. The system of claim 23, wherein the remote device employs the schedule to determine an identity of a device dispatching a received device discovery inquiry.

25. The system of claim 22, wherein one or more of the criteria specify a time interval.

26. The system of claim 22, wherein one or more of the criteria specify a number of device discovery inquiries to ignore.

27. The system of claim 22, wherein the processor further performs maintaining a list of discovered devices.

28. The system of claim 27, wherein a device not replying to a device discovery inquiry is, where one or more criteria are met, kept on the list.
